# EUROPEAN PATENT APPLICATION

(11) **EP 4 372 857 A2**
(43) Date of publication of application: **22.05.2024**
(21) Application number: 23206855.1
(22) Date of filing: 30.10.2023
(51) Int. Cl.: H01M 10/04, H01M 10/0587, H01M 50/107, H01M 50/528, H01M 50/533, H01M 50/538, H01M 50/559

(54) **CYLINDRICAL SECONDARY BATTERY**

(30) Priority: 15.11.2022 KR 20220152407
(71) Applicant: Samsung SDI Co., Ltd., Yongin-si, Gyeonggi-do 17084 (KR)
(72) Inventor: SHIN, Joo Youn, 17084 Yongin-si (KR); PARK, Jung Hyun, 17084 Yongin-si (KR); KIM, Jung Hyun, 17084 Yongin-si (KR); KIM, Joung Ku, 17084 Yongin-si (KR)
(74) Representative: Marks & Clerk LLP

(57) **Abstract**

A cylindrical secondary battery includes: an electrode assembly including a first electrode plate, a separator, and a second electrode plate; a center pin extending along a winding axis of the electrode assembly, the center pin including an insulating material and having a flange on at least one of an upper end and a lower end thereof; a case accommodating the electrode assembly and the center pin; a terminal extending through an upper end of the case and electrically connected to the first electrode plate of the electrode assembly; and a cap plate sealing a lower end of the case.

## Description

### BACKGROUND

### 1 Field

Aspects of embodiments of the present disclosure relate to a cylindrical secondary battery.

### 2. Description of the Related Art

Generally, a cylindrical secondary battery includes a cylindrical electrode assembly, a cylindrical can accommodating the electrode assembly and an electrolyte, and a cap assembly coupled to an opening at one side of the can to seal the can and electrically connected to the electrode assembly to electrically connect an external component and the electrode assembly.

Cylindrical secondary batteries generally have a structure in which a can having a negative polarity and a cap having a positive polarity are insulated from each other by a gasket. In a battery module that includes a plurality of cylindrical secondary batteries connected to one another, bus bars need to be connected to upper and lower portions (or ends) of the secondary batteries, respectively, complicating the structure and increasing the process time.

The above information disclosed in this Background section is for enhancement of understanding of the background of the present disclosure, and therefore, it may contain information that does not constitute prior art.

### SUMMARY

Embodiments of the present disclosure provide a cylindrical secondary battery capable of preventing a short circuit in a winding front-end region of an electrode assembly, which may occur due to pressing of the center of a current collector plate when coupled to a terminal, and having improved electrical insulation.

In addition, embodiments of the present disclosure provide a cylindrical secondary battery exhibiting improved bending imbalance and reduction of defects, which may occur when an electrode tab of an electrode assembly is bent or pressed.

In addition, embodiments of the present disclosure provide a cylindrical secondary battery capable of preventing deformation of a winding core of an electrode assembly and improving safety by internally supporting the electrode assembly.

In addition, embodiments of the present disclosure provide a cylindrical secondary battery having improved height dispersion by directly winding an electrode assembly around a center pin and allowing flange parts of the center pin to act as guides.

A cylindrical secondary battery, according to an embodiment of the present disclosure, includes: an electrode assembly including a first electrode plate, a separator, and a second electrode plate; a center pin extending along a winding axis of the electrode assembly, the center pin including an insulating material and having a flange on at least one of an upper end and a lower end thereof; a case accommodating the electrode assembly and the center pin; a terminal extending through an upper end of the case and electrically connected to the first electrode plate of the electrode assembly; and a cap plate sealing a lower end of the case.

The center pin may include: a cylindrical body part; a first flange part extending outwardly from an upper end of the body part along an upper surface of the electrode assembly; and a second flange part extending outwardly from a lower end of the body part along a lower surface of the electrode assembly.

The body part, the first flange part, and the second flange part may be integrally formed.

Outer diameters of the first flange part and the second flange part may be larger than an outer diameter of the body part.

Outer diameters of the first flange part and the second flange part may be in a range of 1.1 to 4.3 times an outer diameter of the body part.

The electrode assembly may further include: a plurality of positive electrode tabs protruding upwardly from the upper surface of the electrode assembly and bent in a direction of the winding shaft of the electrode assembly; and a plurality of negative electrode tabs protruding downwardly from the lower surface of the electrode assembly and bent in the direction of the winding shaft of the electrode assembly.

From among the plurality of positive electrode tabs, the positive electrode tab at a winding front-end region may be above and may overlap the first flange part on a plane, and from among the plurality of negative electrode tabs, the negative electrode tab at the winding front-end region may be below and may overlap the second flange part on a plane.

The first flange part may cover a partial region adjacent to the winding center shaft on the upper surface of the electrode assembly, and the second flange part may cover a partial region adjacent to the winding center shaft on the lower surface of the electrode assembly.

A length of the body part in the winding shaft direction may correspond to a length of the electrode assembly in the winding shaft direction.

Thicknesses of the body part, the first flange part, and the second flange part of the center pin may each be in a range of 0.1 mm to 1 mm.

The center pin may have a hollow part extending through the center thereof.

A diameter of the hollow part may be smaller than that of a lower surface of the terminal.

The electrode assembly may be directly wound around the center pin so that an outer circumferential surface of the center pin contacts and is closely adhered to an inner circumferential surface of the electrode assembly.

The center pin may be made of polypropylene or polybutylene terephthalate.

The cylindrical secondary battery may further include a first current collector plate between the upper surface of the electrode assembly and the case and electrically connecting the positive electrode tab and the terminal.

The cylindrical secondary battery may further include a second current collector plate having a circular plate shape corresponding to the lower surface of the electrode assembly and contacting and electrically connected to the negative electrode tab that protrudes downwardly from the electrode assembly.

At least some of the above and other features of the invention are set out in the claims.

### BRIEF DESCRIPTION OF DRAWINGS

FIG. 1 is a perspective view of a cylindrical secondary battery according to various embodiments of the present disclosure.
FIG. 2 is a cross-sectional view of the cylindrical secondary battery shown in FIG. 1.
FIG. 3 is a schematic diagram showing an electrode assembly shown in FIG. 2 before being wound.
FIG. 4 is a cross-sectional view of the electrode assembly shown in FIG. 2 before being bent.

### DETAILED DESCRIPTION

Hereinafter, embodiments of the present disclosure will be described, in detail, with reference to the accompanying drawings.

Examples of the present disclosure are provided to more completely describe aspects and features of the present disclosure to those skilled in the art, and the following embodiments may be modified in various other forms. Further, the present disclosure may be embodied in many different forms and should not be construed as being limited to the embodiments set forth herein. Rather, these embodiments are provided so that this disclosure will be thorough and complete and will convey the aspects and features of the present disclosure to those skilled in the art.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. For example, the expression "at least one of a, b, or c" indicates only a, only b, only c, both a and b, both a and c, both b and c, all of a, b, and c, or variations thereof. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Embodiments of the present disclosure will now be described, in detail, with reference to the accompanying drawings so that a person skilled in the art to which the present disclosure belongs can easily implement the present disclosure.

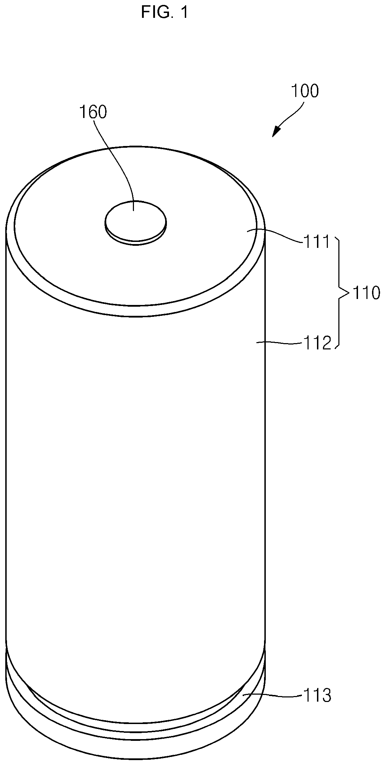

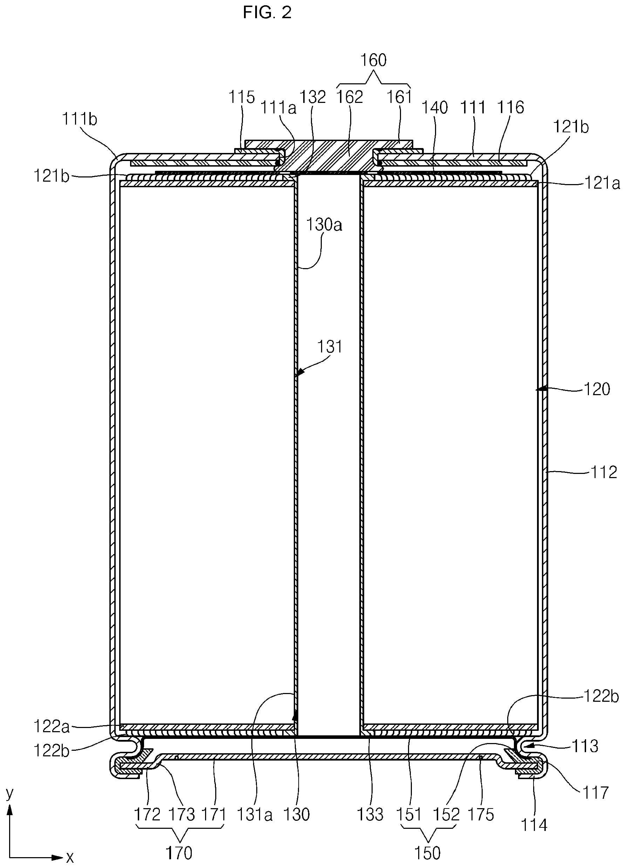

FIG. 1 is a perspective view of a cylindrical secondary battery 100 according to various embodiments of the present disclosure, and FIG. 2 is a cross-sectional view of the cylindrical secondary battery 100 shown in FIG. 1.

As shown in FIGS. 1 and 2, the cylindrical secondary battery 100, according to embodiments of the present disclosure, may include a case (e.g., a can) 110, an electrode assembly 120 accommodated inside the case 110, a center pin 130 located at the center of the electrode assembly 120, a terminal 160 coupled to a terminal hole (e.g., a terminal opening) provided at one end of the case 110, and a cap plate 170 sealing an opening at another end (e.g., an opposite end) of the case 110.

The case 110 may have a circular top portion 111 and a side portion 112 extending downwardly from (e.g., extending a certain length downwardly from) an edge of (e.g., a periphery of) the top portion 111. The top portion 111 and the side portion 112 of the case 110 may be integrally formed. In addition, a bent portion 111b, which is bent in a rounded shape, may be between the top portion 111 and the side portion 112.

The circular top portion 111 may have a flat circular plate shape and may have a terminal hole (e.g., a terminal opening) 111a penetrating (or extending through) the center thereof. The terminal 160 may be inserted into the terminal hole 111a in the top portion 111 to be coupled thereto. A first gasket 115 for sealing and electrical insulation may be interposed between the terminal hole 111a and the terminal 160. The first gasket 115 may prevent (or block) contact between the terminal 160 and the case 110 to electrically separate the terminal 160 and the case 110 from each other. The first gasket 115 may seal the terminal hole 111a in the top portion 111 of the case 110. The first gasket 115 may be made of a resin material, such as polyethylene (PE), polypropylene (PP), or polyethylene terephthalate (PET).

The case 110 may further include an inner insulating member 116 covering an inner surface of the top portion 111. The inner insulating member 116 may be attached to the inner surface of the top portion 111 by, for example, coating or bonding. The inner surface of the top portion 111 is a surface facing the upper surface of the electrode assembly 120 and may be the lower surface of the top portion 111. The inner insulating member 116 may prevent contact between the top portion 111 of the case 110 and a first electrode plate 121 of the electrode assembly 120. In another embodiment, the inner insulating member 116 may extend to the inner surface of the bent portion 111b. The inner insulating member 116 may be provided to cover inner surfaces of the top portion 111 and the bent portion 111b or may be provided to cover only the inner surface of the top portion 111.

In the cylindrical secondary battery 100, the lower portion (e.g., the lower end) of the case 110 is open during the manufacturing process. Therefore, in the cylindrical secondary battery 100, the electrode assembly 120, and the center pin 130 may be inserted through the open lower portion of the case 110 together with an electrolyte solution during the manufacturing process. The electrolyte solution, the electrode assembly 120, and the center pin 130 may be inserted into the case 110 in a state in which the open lower portion of the case 110 faces upwardly. After the electrolyte solution, the electrode assembly 120, and the center pin 130 are inserted into the case 110, the cap plate 170 may be coupled to the open lower portion of the case 110 to seal the inside of the case 110. The electrolyte solution enables movement of lithium ions between the positive electrode plate 121 and the negative electrode plate 122, thereby constituting the electrode assembly 120. The electrolyte solution may be a non-aqueous organic electrolyte solution that is a mixture of a lithium salt and a high-purity organic solvent. In addition, the electrolyte solution may be a polymer using a polymer electrolyte or a solid electrolyte, but the type of electrolyte solution is not limited herein.

The case 110 may be made of steel, a steel alloy, aluminium, an aluminium alloy, or an equivalent thereof, but the material is not limited thereto. In addition, the case 110 may have an inwardly recessed beading part (e.g., a bead) 113 formed at the upper portion thereof and an inwardly bent crimping part (e.g., a crimp) 114 formed at the lower portion thereof around the cap plate 170 to prevent the electrode assembly 120 from deviating to the outside of the case 110.

After the electrode assembly 120 and the center pin 130 are inserted through the open lower end of the case 110, the beading part 113 may be formed, thereby preventing the electrode assembly 120 from being separated from the case 110.

The electrode assembly 120 includes the first electrode plate 121, the second electrode plate 122, and a separator 123. The first electrode plate 121 may be a positive electrode plate, and the second electrode plate 122 may be a negative electrode plate. Of course, the reverse is also possible. Hereinafter, for convenience of description, an embodiment in which the first electrode plate 121 is a positive electrode plate and the second electrode plate 122 is a negative electrode plate will be described as an example. The electrode assembly 120 may be directly wound around the center pin 130. The center pin 130 is fixed to a rotating part of winding equipment and winds the first electrode plate 121, the second electrode plate 122, and the separator 123, each supplied through each roller, on the center pin 130 in an order (e.g., in a predetermined order).

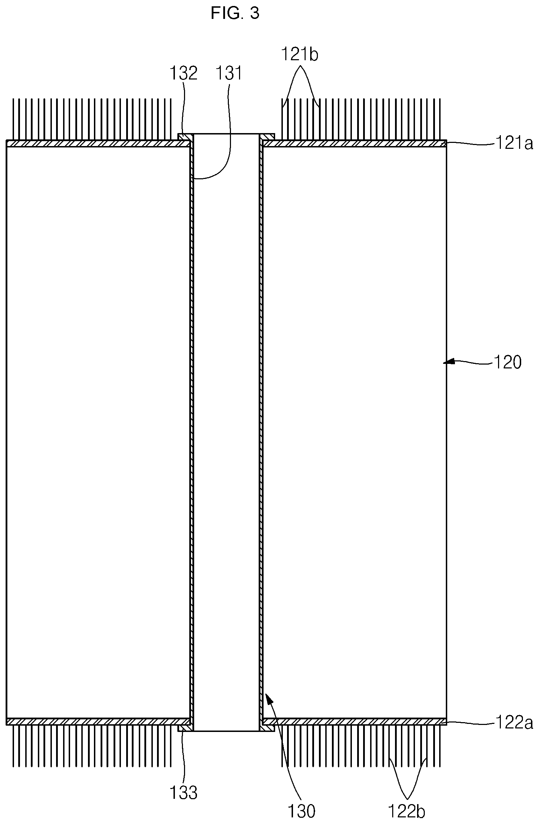

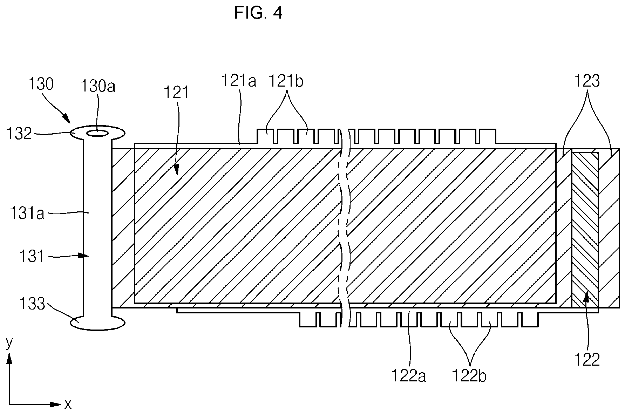

FIG. 3 is a schematic diagram showing the electrode assembly 120 shown in FIG. 2 taken through the center pin 130 before the electrode assembly 120 is wound, and FIG. 4 is a cross-sectional view showing electrode tabs 121b and 122b of the electrode assembly 120 shown in FIG. 2 before being compacted. Hereinafter, the electrode assembly 120 and the center pin 130 will be described with reference to FIGS. 1 to 4.

The first electrode plate 121 includes a plate-shaped metal foil made of aluminium (Al) that is coated, at least on one surface thereof, with a positive electrode active material made of a transition metal oxide. In addition, the first electrode plate 121 may have a positive electrode uncoated portion 121a that is not coated with the positive electrode active material at an upper end thereof. The positive electrode uncoated portion 121a may protrude upwardly from the electrode assembly 120. In addition, the positive electrode uncoated portion 121a may include a plurality of positive electrode tabs 121b. The plurality of positive electrode tabs 121b may be located at the upper end of the positive electrode uncoated portion 121a and may be spaced apart from each other in one direction (e.g., an x direction) before winding. The plurality of positive electrode tabs 121b may not be provided at the winding front end and/or the winding terminating end. The plurality of positive electrode tabs 121b may be formed by laser notching, ultrasonic cutting, or punching. The positive electrode tabs 121b may protrude more upwardly than (e.g., may protrude upwardly beyond) the second electrode plate 122 and the separator 123 in the electrode assembly 120.

The second electrode plate 122 includes a plate-shaped metal foil made of copper (Cu) or nickel (Ni) and is coated, at least on one surface thereof, by a negative electrode active material made of graphite or carbon. In addition, the second electrode plate 122 may have a negative electrode uncoated portion 122a that is not coated with the negative electrode active material at a lower end. In addition, the negative electrode uncoated portion 122a may include a plurality of negative electrode tabs 122b. The plurality of negative electrode tabs 122b may be positioned at the lower end of the negative electrode uncoated portion 122a and may be spaced apart from each other in one direction (e.g., the x direction) before winding. The plurality of negative electrode tabs 122b may not be provided on the winding front end and/or the winding terminating end. The plurality of negative electrode tabs 122b may be formed by laser notching, ultrasonic cutting, or punching. The plurality of negative electrode tabs 122b may protrude more downwardly from the electrode assembly 120 than (e.g., may protrude downwardly beyond) the first electrode plate 121 and the separator 123.

The separator 123 may be polyethylene (PE) or polypropylene (PP), but the present disclosure is not limited thereto. The separator 123 may prevent an electrical short between the first electrode plate 121 and the second electrode plate 122 while allowing the movement of lithium ions therebetween.

After the first electrode plate 121, the separator 123, the second electrode plate 122, and the separator 123 are laminated, the electrode assembly 120 is wound around the center pin 130 from the winding front end in a substantially cylindrical shape. Because the electrode assembly 120 is directly wound around the center pin 130, the winding front end may be in contact with and be closely adhered to the outer surface of the center pin 130. In addition, in the electrode assembly 120, the separator 123 may be wound a certain (or predetermined) number of turns and the first electrode plate 121 and the second electrode plate 122 may then be wound, but the present disclosure is not limited thereto.

In addition, in the electrode assembly 120, the positive electrode tab 121b may protrude upwardly and the negative electrode tab 122b may protrude downwardly. In addition, in the electrode assembly 120, the outermost positive electrode tab 121b may not protrude from the positive electrode uncoated portion 121a, and the outermost negative electrode tab 122b may not protrude from the negative electrode uncoated portion 122a. For example, the electrode assembly 120 may have a step that is more concave at the upper and lower outermost portions compared to other regions. The electrode assembly 120 may prevent contact between the electrode assembly 120 and the case 110 when the inner insulating member 116 is not formed on the bent portion 111b of the case 110.

The center pin 130 may have a hollow circular pipe shape and may be positioned to extend along (e.g., to penetrate or to form) the winding shaft (or winding axis) of the electrode assembly 120. The center pin 130 may include a body part 131 extending along the winding shaft direction (e.g., a y direction) in the shape of a circular pipe and flanges 132 and 133 at the upper end and lower end of the body part 131, respectively. The flanges 132 and 133 may include a first flange part 132 extending outwardly along the upper surface of the electrode assembly 120 from the upper end of the body part 131, and a second flange part 133 extending outwardly from the lower end of the body part 131 along the lower surface of the electrode assembly 120. The center pin 130 may be made of an insulating material. For example, the center pin 130 may be made of polypropylene (PP) or polybutylene terephthalate (PBT). The body part 131, the first flange part 132, and the second flange part 133 may be integrally formed.

The outer circumferential surface 131a of the body part 131 may be in contact with and may be closely adhered to the inner circumferential surface of the electrode assembly 120. The body part 131 may have a circular pipe shape and may have a hollow part 130a penetrating (or extending) in a central shaft direction. The diameter of the hollow part 130a, which is the inner diameter of the body part 131, may be smaller than that of the lower surface of the terminal 160. The body part 131 may have an outer diameter in a range of about 4 mm to about 7 mm.

The first flange part 132 and the second flange part 133 may be ring-shaped plates having a hole (e.g., an opening) in the center. For example, the flange parts 132 and 133 may be flat circular ring-shaped plates. In addition, the first flange part 132 and the second flange part 133 may respectively have a hollow part penetrating (e.g., an opening extending through) the centers thereof and may extend from the hollow part of the body part 131. For example, the center pin 130 may have a hollow part 130a penetrating in the central shaft direction. In addition, in the center pin 130, the inner diameter of the body part 131 may be the same as that of the first flange part 132 and the inner diameter of the second flange part 133.

The first flange part 132 may cover a portion of the upper surface of the electrode assembly 120, and the second flange part 133 may cover a portion of the lower surface of the electrode assembly 120. For example, the first flange part 132 of the center pin 130 may cover a partial region of the upper surface of the electrode assembly 120 adjacent to the winding center shaft, and the second flange part 133 of the center pin 130 may cover a partial region of the lower surface of the electrode assembly 120 adjacent to the winding center shaft. The length of the body part 131 of the center pin 130 in a winding shaft direction (e.g., the y direction) may correspond to the length of the electrode assembly 120 in the winding shaft direction. The length of the electrode assembly 120 in the winding shaft direction (e.g., the y direction) may be a length excluding the positive electrode tab 121b and the negative electrode tab 122b.

When the electrode assembly 120 is wound along the outer circumferential surface of the center pin 130, the first flange part 132 and the second flange part 133 act as winding guides at the winding front end, thereby improving a height dispersion of the electrode assembly 120.

In the electrode assembly 120 wound around the center pin 130, the positive electrode tab 121b may protrude more upwardly than the center pin 130 (e.g., may protrude above the center pin 130), and the negative electrode tab 122b may protrude more downwardly than the center pin 130 (e.g., may protrude below the center pin 130). The positive electrode tab 121b and the negative electrode tab 122b may be bent toward the winding shaft. For example, the plurality of positive electrode tabs 121b and the plurality of negative electrode tabs 122b may be bent and compacted toward the center pin 130 from the winding front-end region. In the electrode assembly 120, the positive electrode tab 121b and the negative electrode tab 122b in the region adjacent to the center pin 130 may be bent and compacted by using the first flange part 132 and the second flange part 133 as guides, respectively.

From among the plurality of positive electrode tabs 121b, the positive electrode tab 121b at the winding front-end region may be located above the first flange part 132. In addition, from among the plurality of positive electrode tabs 121b, the positive electrode tab 121b located at the winding front-end region may overlap the first flange part 132 on a plane. In addition, from among the plurality of negative electrode tabs 122b, the negative electrode tab 122b located at the winding front-end region may be located below the second flange part 133. In addition, from among the plurality of negative electrode tabs 122b, the negative electrode tab 122b positioned at the winding front-end region may overlap the first flange part 132 on a plane. The winding front-end region, as used herein, may refer to a partial region adjacent to the winding front end contacting the center pin 130.

The first flange part 132 and the second flange part 133 of the center pin 130 may improve twisting, tearing, or bending unevenness, which may occur when the positive electrode tab 121b and the negative electrode tab 122b, which are thin films, located in the winding front-end region are bent and compacted. In addition, the center pin 130 supports the electrode assembly 120 from the inside, thereby preventing the winding core of the electrode assembly 120 from deforming and improving safety. In addition, the center pin 130 may prevent a short circuit due to pressing, which occurs at the winding front end when the positive electrode tab 121b and the negative electrode tab 122b are bent and compacted. In addition, because the center pin 130 is made of an insulating material, the electrical insulation of the electrode assembly 120 may be further improved.

The outer diameters of the first flange part 132 and the second flange part 133 may be larger than the outer diameter of the body part 131. In addition, the outer diameters of the first flange part 132 and the second flange part 133 may be larger than the outer diameter of the lower surface of the terminal 160. The outer diameters of the first flange part 132 and the second flange part 133 may be in a range of about 9.5 mm to about 17 mm. In addition, the outer diameters of the first flange part 132 and the second flange part 133 may be in a range of about 1.1 to about 4.3 times the outer diameter of the body part 131. When the outer diameter of the first flange part 132 is smaller than about 1.1 times the outer diameter of the body part 131, it may not be easy for the first flange part 132 to act as a guide when winding the electrode assembly 120 or when bending the electrode tabs 121b and 122b. In addition, when the outer diameter of the first flange part 132 exceeds about 4.3 times the outer diameter of the body part 131, electrical conductivity may decrease due to a decrease in regions in which the electrode tabs 121b and 122b may be formed.

In addition, each of the body part 131 of the center pin 130, the first flange part 132, and the second flange part 133 may have a thickness in a range of about 0.1 mm to about 1 mm. If the thickness of each of the body part 131, the first flange part 132, and the second flange part 133 is less than about 0.1 mm, it may be difficult to maintain rigidity, and if the thickness thereof exceeds about 1 mm, the capacity of the electrode assembly 120 may decrease due to an unnecessary increase in thickness.

In the electrode assembly 120, from among the positive electrode tabs 121b, the positive electrode tab 121b adjacent to the center pin 130 may be bent and come into contact with the upper surface of the first flange part 132. In addition, in the electrode assembly 120, from among the negative electrode tabs 122b, the negative electrode tab 122b adjacent to the center pin 130 may be bent and come into contact with the lower surface of the second flange part 133. The center pin 130 may suppress deformation of the electrode assembly 120 and maintain rigidity.

The first current collector plate 140 may be a circular metal plate shaped to correspond to the upper surface of the electrode assembly 120. A planar size of the first current collector plate 140 may be equal to or smaller than a size of the upper surface of the electrode assembly 120. The first current collector plate 140 may be made of aluminium (Al). The first current collector plate 140 may be fixed and electrically connected to the positive electrode tabs 121b of the electrode assembly 120 by welding in a state in which the lower surface thereof is in contact with the upper surface of the electrode assembly 120. The first current collector plate 140 may be fixed and electrically connected to the terminal 160 by welding in a state in which the upper surface thereof is in contact with the lower surface of the terminal 160. The first current collector plate 140 acts as a passage for a current flow between the first electrode plate 121 of the electrode assembly 120 and the terminal 160. The first current collector plate 140 may be stored in (e.g., may be accommodated in) the case 110 after being welded to the positive electrode tab 121b of the electrode assembly 120 and may then welded to the terminal 160. The first current collector plate 140 may have a thickness in a range of about 0.2 mm to about 1.5 mm. When the first current collector plate 140, which may be a thin plate, is welded to the terminal 160, the central portion thereof may be pressed by the terminal 160 that protrudes downwardly, and thus, the first current collector plate 140 may protrude downwardly. Here, the first flange part 132 of the center pin 130 may be located below the center of the first current collector plate 140, thereby preventing a short circuit by pressing the center of the electrode assembly 120.

The second current collector plate 150 may have a circular flat portion 151 corresponding to the lower surface of the electrode assembly 120 and an extending portion 152 extending downwardly from an edge of the flat portion 151. An upper surface of the flat portion 151 may be in contact with the lower surface of the electrode assembly 120. The upper surface of the flat portion 151 may be fixed and electrically connected to the negative electrode tabs 122b of the electrode assembly 120 by welding in a state of being in contact with the lower surface of the electrode assembly 120.

The extending portion 152 may extend downwardly from the edge of the flat portion 151. In one embodiment, a plurality of extending portions 152 may be provided along the edge of the flat portion 151 and may be spaced apart from each other. The extending portion 152 may be bent downwardly from the edge of the flat portion 151 to extend therefrom. In addition, the extending portion 152 may be in contact with the inner surface of the beading part 113. For example, the extending portion 152 may be rounded or bent along the beading part 113. The inner surface may be an inner surface of the case 110. An end (e.g., a distal end) of the extending portion 152 may be positioned between the beading part 113 and the second gasket 117. The extending portion 152 may be in contact with and may be coupled to the beading part 113 of the case 110. In one embodiment, the extending portion 152 may be joined by welding while being in contact with the inner surface of the beading part 113 of the case 110. The second current collector plate 150 acts as a passage of a current flow between the second electrode plate 122 of the electrode assembly 120 and the case 110. That is, the case 110 may be a negative electrode terminal. In addition, the second current collector plate 150 may have a hole (e.g., an opening) penetrating between the upper and lower surfaces at the center of the flat portion 151, and an electrolyte may be easily injected into the electrode assembly 120 through the hole.

The terminal 160 may be inserted into the terminal hole 111a in the top portion 111 of the case 110 and electrically connected to the first current collector plate 140. The terminal 160 may be electrically connected to the positive electrode tab 121b of the electrode assembly 120 through the first current collector plate 140. That is, the terminal 160 may be a positive electrode terminal. The terminal 160 and the case 110 may have different polarities. The terminal 160 may be made of the same or similar material as the first current collector plate 140 and the first electrode plate 121. The diameter of a portion of the terminal 160 exposed to the upper portion of the case 110 and the diameter of a portion thereof positioned inside the case 110 may be larger than the diameter of a portion thereof positioned in the terminal hole 111a.

The terminal 160 may have a head 161 exposed at the upper portion of the case 110 and a fastening part 162 extending from the center of the head 161 toward the inside of the case 110. A planar size of the head 161 may be larger than that of the fastening part 162. An upper end of the fastening part 162 of the terminal 160 may be connected to a lower surface of the head 161, and the head 161 and the fastening part 162 may be integrally formed. The terminal 160 may be coupled to the terminal hole 111a in the case 110 from the outside to the inside. The first gasket 115 may be interposed between the terminal 160 and the case 110. The lower portion of the fastening part 162 is compressively deformed (e.g., is compression-molded) by riveting, and the terminal hole 111a may be sealed by pressing the first gasket 115. The fastening part 162 may have a diameter that gradually increases from the terminal hole 111a toward the inside of the case 110. The lower surface of the fastening part 162 may overlap the case 110 on a plane.

In addition, the first gasket 115 may be interposed between the head 161 and the top portion 111 of the case 110. For example, the head 161 may be located above the top portion 111, and the first gasket 115, which prevents (or blocks) electrical contact, may be interposed in a region at where the head 161 and the top portion 111 overlap each other on a plane.

In addition, the first gasket 115 may be interposed between the fastening part 162 and the terminal hole 111a in the case 110 and may have an upper end extending between the head 161 and the top portion 111 of the case 110. An end of the upper end of the first gasket 115 may extend further outwardly than (e.g., may extend outwardly beyond) the head 161. For example, the first gasket 115 may be interposed between the terminal 160 and the case 110 to electrically insulate the terminal 160 and the case 110 from each other, followed by sealing. The first gasket 115 may be in contact with the inner insulating member 116.

The cap plate 170 is a circular metal plate and may be coupled to the lower end of the case 110. A lower surface of the cap plate 170 may be exposed to the outside. The cap plate 170 may be coupled to the lower end of the case 110 in a state in which the second gasket 117 is interposed therebetween, thereby preventing electrical connection with the case 110. The cap plate 170 may not be electrically connected to the positive electrode or the negative electrode of the electrode assembly 120 and, thus, may not have a separate electrical polarity.

The cap plate 170 may be fixed in a state in which the edge region 172 is positioned between the beading part 113 and the crimping part 114 of the case 110. For example, the cap plate 170 may be seated in a state in which the second gasket 117 is interposed under the lower part of the beading part 113 of the case 110. Thereafter, the crimping part 114 of the case 110 may be bent toward the inside of the cap plate 170 to press the second gasket 117, and thus, the cap plate 170 and the case 110 may be coupled together. The second gasket 117 may be made of a resin material, such as polyethylene (PE), polypropylene (PP), or polyethylene terephthalate (PET). The second gasket 117 may press a portion between the cap plate 170 and the case 110, followed by sealing, and may prevent the cap plate 170 from being separated from the case 110. The second gasket 117 may have an upper portion interposed between the beading part 113 and the cap plate 170 and a lower portion interposed between the crimping part 114 and the cap plate 170. A lower end of the second gasket 117 may protrude toward the center of the cap plate 170 relative to the crimping part 114.

The cap plate 170 may have a central region 171 positioned below the second current collector plate 150 and an edge region 172 coupled to the case 110 by being interposed between the beading part 113 and the crimping part 114 of the case 110. In addition, the central region 171 of the cap plate 170 may be concave toward the inside of the case 110 relative to the edge region 172. For example, the edge region 172 of the cap plate 170 may protrude outwardly from the case 110 relative to the central region 171. In addition, the cap plate 170 may have a connection region 173 connecting (or extending between) the central region 171 and the edge region 172. The connection region 173 may be inclined due to a step between the central region 171 and the edge region 172. In addition, bent portions may be provided between the connection region 173 and the central region 171 and between the connection region 173 and the edge region 172.

The cap plate 170 may include a vent 175 to open the central region 171 by a set pressure. The vent 175 may have a smaller thickness than other regions of the cap plate 170. The vent 175 may be a notch formed upwardly from the lower surface of the cap plate 170.

In the cylindrical secondary battery 100, according to embodiments of the present disclosure, when excessive internal pressure is generated inside the case 110, the vent 175 may be ruptured (e.g., may burst) to discharge the excessive internal pressure. The vent 175 of the cap plate 170 may be spaced apart from the center thereof and may have a ring shape on a plane. In another embodiment, the vent 175 may have at least one pattern having a straight or curved shape on a plane. The vent 175 may be a portion of the cap plate 170 having a smaller thickness than other regions of the cap plate 170. The thickness of the vent 175 may be in a range of about 0.05 mm to about 0.35 mm. When the thickness of the vent 175 is less than about 0.05 mm, deformation or cracking may occur even if the internal pressure of the cylindrical secondary battery 100 does not increase, and when the thickness of the vent 175 exceeds about 0.35 mm, the vent 175 may not be ruptured and may not operate as the vent 175 even if the internal pressure of the cylindrical secondary battery 100 increases.

As described above, a cylindrical secondary battery, according to embodiments of the present disclosure, prevents a short circuit in a winding front-end region of an electrode assembly, which may occur due to pressing of the center of a current collector plate when coupled to a terminal, and exhibits improved electrical insulation.

In addition, a cylindrical secondary battery, according to various embodiments of the present disclosure, improves bending imbalance and reduces defects, which may occur when an electrode tab of an electrode assembly is bent or pressed.

In addition, a cylindrical secondary battery, according to various embodiments of the present disclosure, may prevent deformation of a winding core of an electrode assembly and may improve safety by internally supporting the electrode assembly.

In addition, a cylindrical secondary battery, according to various embodiments of the present disclosure, improves a height dispersion by directly winding an electrode assembly around a center pin and allowing flange parts of the center pin to act as guides.

The foregoing embodiments are only some embodiments for carrying out the cylindrical secondary battery according to the present disclosure, which is not limited to the embodiments. It will be understood by a person skilled in the art that various changes in form and details may be made therein without departing from the scope of the present disclosure as defined by the following claims and their equivalents.

## Claims

1. A cylindrical secondary battery comprising:
an electrode assembly comprising a first electrode plate, a separator, and a second electrode plate;
a center pin extending along a winding axis of the electrode assembly, the center pin comprising an insulating material and having a flange on at least one of an upper end and a lower end thereof;
a case accommodating the electrode assembly and the center pin;
a terminal extending through an upper end of the case and electrically connected to the first electrode plate of the electrode assembly; and
a cap plate sealing a lower end of the case.

2. The cylindrical secondary battery as claimed in claim 1, wherein the center pin comprises:
a cylindrical body part;
a first flange part extending outwardly from an upper end of the body part along an upper surface of the electrode assembly; and
a second flange part extending outwardly from a lower end of the body part along a lower surface of the electrode assembly.

3. The cylindrical secondary battery as claimed in claim 2, wherein the body part, the first flange part, and the second flange part are integrally formed.

4. The cylindrical secondary battery as claimed in claim 2 or claim 3, wherein outer diameters of the first flange part and the second flange part are larger than an outer diameter of the body part.

5. The cylindrical secondary battery as claimed in any one of claims 2 to 4, wherein outer diameters of the first flange part and the second flange part are in a range of 1.1 to 4.3 times an outer diameter of the body part.

6. The cylindrical secondary battery as claimed in any one of claims 2 to 5, wherein the electrode assembly further comprises:
a plurality of positive electrode tabs protruding upwardly from the upper surface of the electrode assembly and bent in a direction of a winding shaft of the electrode assembly; and
a plurality of negative electrode tabs protruding downwardly from the lower surface of the electrode assembly and bent in the direction of the winding shaft of the electrode assembly.

7. The cylindrical secondary battery as claimed in claim 6, wherein from among the plurality of positive electrode tabs, the positive electrode tab at a winding front-end region is above and overlaps the first flange part on a plane, and
wherein from among the plurality of negative electrode tabs, the negative electrode tab at the winding front-end region is below and overlaps the second flange part on a plane.

8. The cylindrical secondary battery as claimed in any one of claims 2 to 7, wherein the first flange part covers a partial region adjacent to a winding center shaft on the upper surface of the electrode assembly, and
wherein the second flange part covers a partial region adjacent to the winding center shaft on the lower surface of the electrode assembly.

9. The cylindrical secondary battery as claimed in any one of claims 2 to 8, wherein a length of the body part in a winding shaft direction corresponds to a length of the electrode assembly in the winding shaft direction.

10. The cylindrical secondary battery as claimed in any one of claims 2 to 9, wherein thicknesses of the body part, the first flange part, and the second flange part of the center pin are each in a range of 0.1 mm to 1 mm.

11. The cylindrical secondary battery as claimed in any one of claims 1 to 10, wherein the center pin has a hollow part extending through the center thereof.

12. The cylindrical secondary battery as claimed in claim 11, wherein a diameter of the hollow part is smaller than that of a lower surface of the terminal.

13. The cylindrical secondary battery as claimed in any one of claims 1 to 12, wherein the electrode assembly is directly wound around the center pin so that an outer circumferential surface of the center pin contacts and is closely adhered to an inner circumferential surface of the electrode assembly.

14. The cylindrical secondary battery as claimed in any one of claims 1 to 13, wherein the center pin is made of polypropylene or polybutylene terephthalate.

15. The cylindrical secondary battery as claimed in any one of claims 6 to 14, further comprising:
(i) a first current collector plate between the upper surface of the electrode assembly and the case and electrically connecting the positive electrode tab and the terminal; and/or
(ii) a second current collector plate having a circular plate shape corresponding to the lower surface of the electrode assembly and contacting and electrically connected to the negative electrode tab that protrudes downwardly from the electrode assembly.
